Europäisches Patentamt

European Patent Office

Office européen des brevets

(19)

(11) **EP 0 607 938 B1**

(12) **EUROPEAN PATENT SPECIFICATION**

(45) Date of publication and mention
of the grant of the patent:
**10.09.1997 Bulletin 1997/37**

(51) Int Cl.⁶: **G01B 21/08**

(21) Application number: **94100712.2**

(22) Date of filing: **19.01.1994**

(54) **Method and apparatus comprising two magnetic sensors and one laser meter for measuring the thickness of a film**

Verfahren und Vorrichtung, zwei magnetische Sensoren und eine Laser-Messeinrichtung enthaltend, für das Messen der Dicke eines Filmes

Procédé et dispositif contenant deux capteurs magnétiques et un capteur à laser pour mesurer l'épaisseur d'un film

(84) Designated Contracting States:
**AT BE CH DE DK ES FR GB GR IE IT LI LU MC NL PT SE**

(30) Priority: **22.01.1993 IT MI930092**

(43) Date of publication of application:
**27.07.1994 Bulletin 1994/30**

(73) Proprietor: **ELECTRONIC SYSTEMS S.P.A.**
**I-28015 Momo (No) (IT)**

(72) Inventor: **Masotti, Alessandro**
**I-28040 Lesa NO (NO)**

(74) Representative: **La Ciura, Salvatore**
**Via Francesco Sforza, 3**
**20122 Milano (IT)**

(56) References cited:
**WO-A-91/15733      DE-A- 3 929 469**
**US-A- 4 977 853**

• **PATENT ABSTRACTS OF JAPAN vol. 11, no. 107 (P-563) (2554) 4 April 1987 & JP-A-61 254 812 (MEISAN K.K.) 12 November 1986.**

## Description

This invention proposes an apparatus and the relevant method for measuring the thickness of a thin film while the film moves forward.

The apparatus includes a metal cylinder, on which the film to be measured is caused to pass, and a scanning head that moves alternately along a slide parallel to the cylinder axis and comprises a pair of magnetic sensors and a laser sensor placed between the two magnetic sensors.

The magnetic sensors sense the distance of the cylinder surface in correspondence with the points where the sensors are fitted; the distance of the cylinder in correspondence with the point where the laser measurements is performed is then obtained by interpolation.

The laser senses the distance of the surface of the film, the thickness of which is obtained as the difference between the two measurements.

In order to calibrate the apparatus, compensating for the difference between the magnetic sensors and the laser sensor reading curves, a reading is to be performed in a zone where the cylinder surface exhibits, relative to the axis, a profile that is known a priori.

A reading is then performed by means of the first sensor with the scanning head held standstill, sensing the surface in correspondence with a plan perpendicular to the axis; the reading is repeated by means of the remaining sensors with the head held standstill, in correspondence with the same zone.

The comparison between the readings performed allows the difference between magnetic the sensor curves and the laser one to be detected, in order to accurately calibrate the machine.

Apparatuses for measuring the thickness of a film while the film is moving are known.

For instance apparatuses comprising a scanning head that moves along a slide in a direction perpendicular to the film forward movement including a radiation emitter, said radiations being detected by a sensor, such as a ionization chamber, moving with the emitter and arranged the opposite side relative to the film, are known.

The thickness of the material can be calculated as a function of the amount of radiation detected.

Another system provides the utilization of a magnetic sensor coupled to a laser sensor.

In such a case the film is passed on a metal cylinder while the head with the two sensors moves along an axis parallel to the cylinder one.

The magnetic sensor senses the distance of the cylinder metal surface while the laser measures the distance of the film surface.

The difference between such two measurements indicates the thickness.

In many cases it is however necessary to keep the measurement tolerances within very low values, in the range of one micron, and with the known apparatuses there are considerable difficulties due, e.g., to the cylinder surface unevennesses.

Since the reading is performed while the cylinder is rotating, it is obvious that the sensors, that move parallel to the cylinder axis and lie at a distance of some centimeters from one another, perform detection (at the same height along the axis) at different times. Owing to the cylinder rotation, the reading is then effected in different positions of the cylinder surface, the angular distance of which positions is a function of the film forward speed.

On the other hand, it is not possible to slow down the film speed withouth delaying work, nor is it possible to increase beyond given limits the head scanning speed.

As a consequence this problem has not yet been entirely solved.

British patent n. GB 2.217.835 to Kineron describes a machine which offers a part solution of the problem and provides for utilizing a magnetic sensor on which a slot where the laser sensor is fitted is provided in correspondence with the central zone.

Such a solution too is not free from troubles, also because the magnetic sensor, having an annular shape, reads the distance of the metal surface also along a direction perpendicular to the scanning head forward movement direction, with the risk of errors due to unevennesses of the cylinder surface along a same reading arc, unevennesses that would be summed to those detected along a line parallel to the axis.

A gauge device like the one described the above mentioned document GB 2,217,835 is also described in US 4,977,853.

DE 3,929,469 A1 describes a gauge device which differs from those described in GB 2,217,835 and US 4,977,853 in that the magnetic sensor, which measures the distance of a metal reference surface, and the optical sensor, which measures the distance of the free side of a web in contact with said metal reference surface, operate on parallel but different measuring axis. It is obvious for the skilled reader that the reliability of such arrangement is limited by the unavoidable profile unevennesses of said metal reference surface.

In particular the accuracy of such gauge depends on the range of variation of the surface profile along the gauge's moving direction.

This invention proposes now an apparatus according to claim 1 and the relevant method for measuring the thickness of a film according to claim 5, which allow a further improvement in the results obtained by said known machines to be achieved.

The apparatus includes a scanning head fitted with a pair of magnetic sensors between which a laser meter is fitted.

The distance of the cylindrical surface in correspondence with the zone where the measurement by the laser is effected is obtained by interpolation between the measurements performed by the magnetic sensors.

The laser measures then the distance of the film surface and the thickness is obtained with adequate accuracy as the difference between said values.

The machine provides, moreover, a self-calibration function.

To this aim a zone shaped so that the cylinder surface exhibits a known profile is provided in correspondence with a cylinder end, said zone having preferably its surface subdivided into more cylindrical profile sectors with different diameters; in such zone three measurements are performed, one by each sensor, each measurement being performed in the same point as the previous ones and with the scanning head held standstill.

Each sensor thereby senses exactly the same surface known a priori, and it is therefore possible to determine, from the comparison between the measurements performed, the difference between the magnetic sensors' and the laser sensor's response curves.

This invention will now be described in detail, just as a non-limiting example, with reference to the attached figures, where:

- figure 1 shows a schematic perspective view of the machine according to the invention;
- figure 2 schematically shows a detail of figure 1;
- figure 3 is a block diagram illustrating the measuring method according to the invention;
- figure 4 is a block diagram illustrating the machine calibration function.

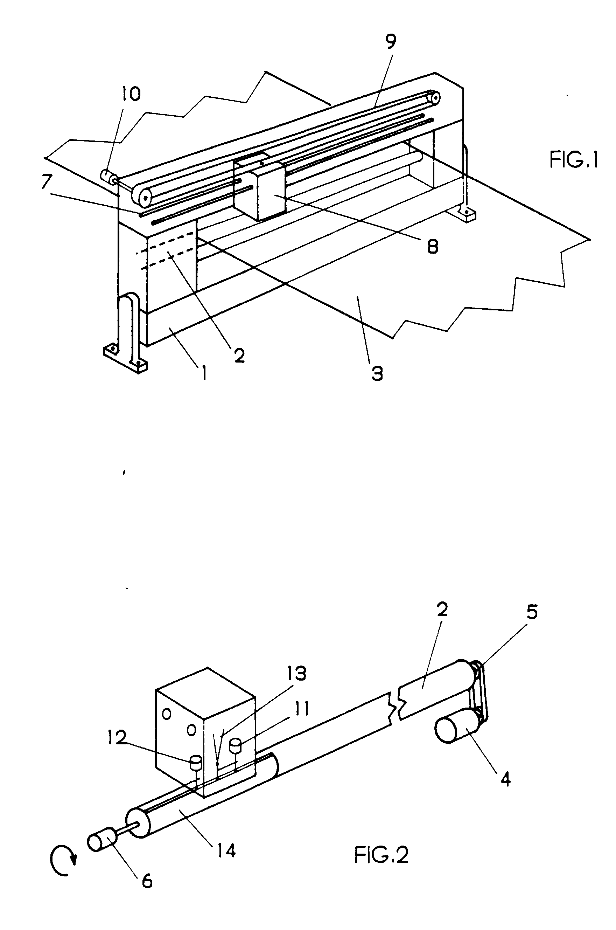

With reference to figure 1, the machine according to the invention includes a frame 1 on which a metal cylinder 2 with smooth ground surface is mounted, on which frame the sheet of material to be measured, indicated by 3, is slided.

The cylinder is preferably driven by an electric motor 4 or the like or it can be dragged by sheet 3 while moving forward.

To this purpose the connection between motor and cylinder is by means of a ratchet 5 that allows the cylinder to rotate even while the motor is stopped.

The cylinder angular position is detected, instant after instant, by an encoder 6 connected to electronic machine control devices which are not illustrated since they are of a known type.

A pair of slides 7 along which a scanning head 8 driven by a belt 9 or the like slides, are fitted above the cylinder.

In this case too the position of head 8 along slides 7 is detected, instant after instant, by an encoder 10 mounted on the shaft of one of the belt supporting pulleys.

The scanning head 9 includes a pair of magnetic sensors 11 and 12 and a laser sensor 13 placed between the two magnetic ones.

Sensors 11 and 12 have the capability of measuring the distance of the cylinder surface from the scanning head while the laser sensor senses the distance of sheet 3 surface.

Owing to the sensor physical dimensions, the same must necessarily be placed at a distance from one another, which distance must be in the range of 2 - 8 cm., which might cause measurement errors that, although limited, are to be preferably avoided.

It is in fact clear that an unevenness whatsoever of the cylinder surface would cause a measurement error equal to the difference of the distance between cylinder and scanning head as detected in correspondence with the magnetic sensor and in correspondence with the laser sensor.

Let us suppose that the cylinder radius in the point where the magnetic sensor is at the time of measurement, owing to a working imperfection, is a few microns lower than the cylinder radius in the zone where the laser sensor performs its reading.

Such a difference shall then cause a corresponding reading error in the film thickness.

In order to avoid this risk, the method according to the invention provides for the cylinder surface to be sensed by both sensors 11 and 12 and for the calculation, by interpolation, of the cylinder surface distance in correspondence with the zone where the laser performs its reading.

It is then clear that possible defects of the cyilindrical surface are cancelled or at least largely compensated.

Once this theoretical distance of the cylindrical surface in correspondence with the zone where the laser reading is performed is known, the film thickness in that point is determined by simply subtracting the two measured values.

Another problem is due to the fact that while the laser response curve is constant under the machine operating conditions, the magnetic sensor response curves, besides being different from the previous one, also vary depending on temperature.

It is then necessary to possibly calibrate the machine in order to take into account such differences and, to this aim, a zone in the cylinder head is provided, indicated by 14, for the head calibration.

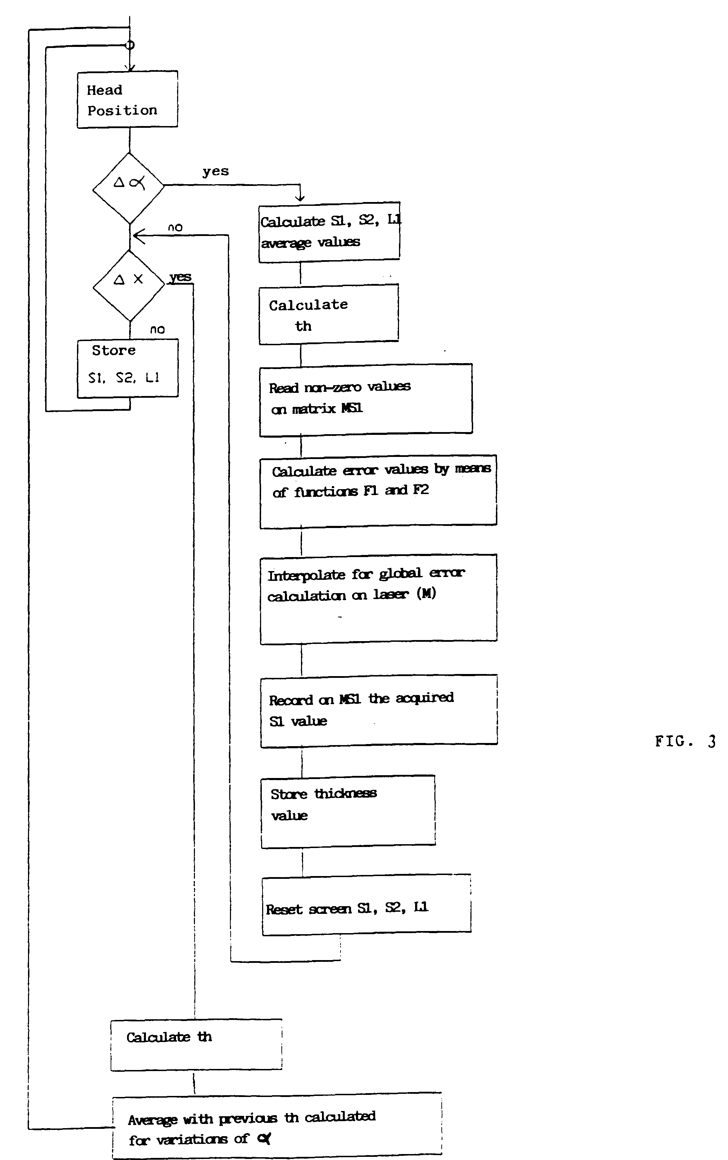

In such zone, which in figure 2 is shown magnified for greater convenience, the cylinder surface is not round but it presents more sectors with variable radius, e.g. with the profile illustrated in figure 2.

A second encoder checks the angular position of this part of the cylinder.

To perform the machine calibration, then, the scanning head is brought in correspondence with such zone 14 of the cylinder and a first reading is performed, holding the head standstill, by sensing the cylinder surface in correspondence with a plane perpendicular to the axis by means of one of the magnetic sensors.

The head is then moved, thereby bringing the laser sensor in correspondence with the same point and the reading is performed again, the same reading being thereafter repeated upon bringing to the same point the second sensor.

Three readings are then available, all relevant to the same surface known <u>a priori</u>, that allow, by comparison, to calibrate the machine by adjusting the response curves of the magnetic sensors as a function of the readings values given by the laser.

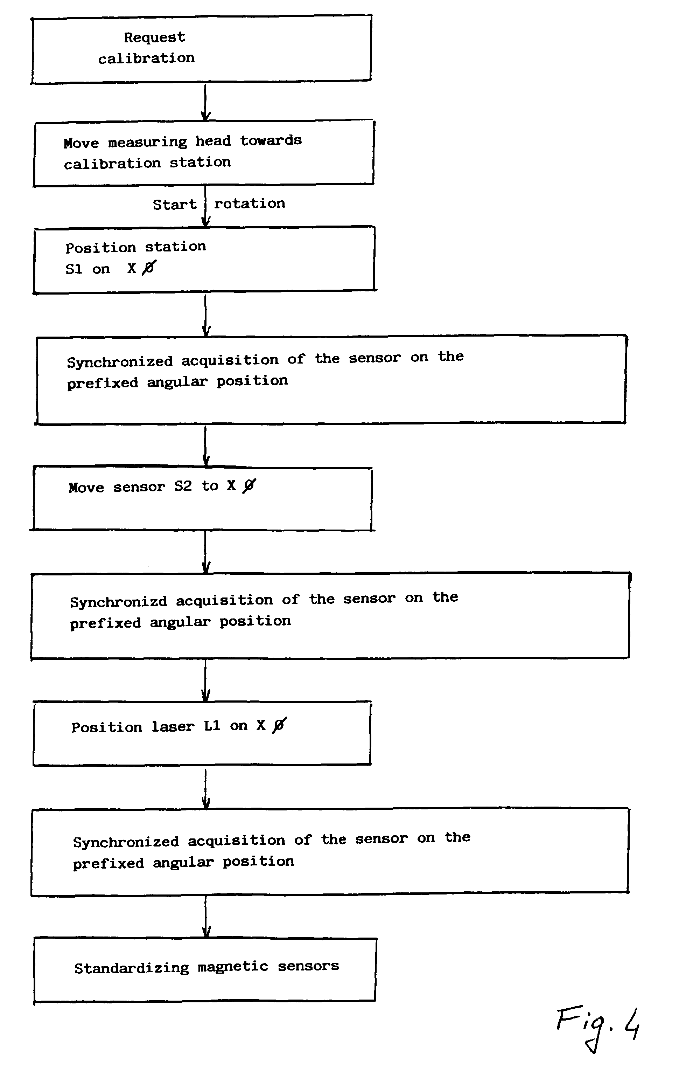

Figure 4 shows a block diagram relative to such calibration function.

The calibration zone shall be preferably obtained in correspondence with one of the cylinder ends and such cylinder part assigned to calibration may be set to rotate independently from the remaining part. Such an arrangement allows the calibration at an optimum revolving speed, both with the main roller stopped and during the film sliding, to be performed.

Through thus calibration phase, by reading the values detected by the laser and the sensors in correspondence with a series of cylinder angular positions, a table of values is built up from which the response curves of both the laser sensor and the magnetic sensors are obtained.

Such curves are then recorded to be then utilized during the film thickness measuring phase.

As said hereinabove, the film thickness in a given point, defined e.g. by the abscissa x along the cylinder axis and the rotation angle $\alpha$ of the same, is given by the difference between the distance as measured by the laser and the distance obtained based on the suitably averaged measurements of the two magnetic sensors.

Indicating by Th the thickness, L the laser sensor measurement and M the contribution of the magnetic sensors, such thickness shall be given by the formula:

$$Th(x,\alpha) = L(x,\alpha) - M(x,\alpha) \qquad (I)$$

where:

- Th$(x,\alpha)$ = measurement in correspondence with the angular position $\alpha$ and the transversal position x
- L$(x,\alpha)$ = standardized measurement of the laser sensor corresponding to positions x,$\alpha$
- M$(x,\alpha)$ = standardized measurement of the magnetic sensor corresponding to positions x,$\alpha$
- $\alpha$: angular position
- x: transversal position, i.e. along the movement axis of the sensors.

The magnetic readers contribution is a function of the measurements performed in both magnetic sensors and, as a first approximation, it can be calculated by linear interpolation, according to the following formula:

$$M(x,\alpha) = \frac{F1(S1) + F2(S2)}{2} \qquad (II)$$

where

F1(S1), F2(S2) = linearization functions of the signal from magnetic sensors S1, S2

Since however it is not certain that the line joining the two magnetic sensors reading points is a straight line, an interpolation of a higher order should suitably be performed for higher accuracy.

To this aim, in the method according to the invention a matrix constiting of a series of cells each corresponding to a cylinder surface zone defined in any case by abscissa and angular position is formed and, at every passage of the heads, the values read in the zones corresponding to the different cells are stored.

Such values are stored to build up the matrix.

During the machine operation the reading heads perform a series of scannings by moving in a direction parallel to the cylinder axis and, for each reading, the program checks whether the values corresponding to the zones comprised between the reading points between the two magnetic sensors are stored in the table.

If such values are stored the same are utilized to perform a polynomial interpolation obtaining the cylindrical surface distance in correspondence of the laser reading zone, by means of the following formula:

$$M(x,\alpha) = IP\{ F_1 [ S_1 (\alpha,x\text{-d})], F_2 [ S_2 (\alpha,x\text{+d})],$$

$$F_1 [MS (\alpha,x\text{+i})] \ i \qquad = \text{-}(K\text{-}1),...,\text{+}(K\text{-}1)$$

$$K = \left| \frac{d}{ds} \right|$$

where:

- d: distance between magnetic sensor axis and laser sensor axis

- ds: transversal lenght of the elementary cell

- F1 (S1) F2 (S2) = linearization functions of the signal from magnetic sensors S1 S2

- S1$(\alpha,x)$,S2$(\alpha,x)$ = signal from magnetic sensors in position $\alpha$,x

- MS$(x,\alpha)$ = average value of magnetic sensor signals proceeding from the sensors in the same position.

In case the distances in correspondence with the intermediate points between the reading zones of two magnetic sensors are not yet stored, the linear interpolation is carried out.

Moreover at every passage the magnetic sensor readings are stored and inserted into the matrix where they replace the previous ones, in order to keep the table updated and thereby compensate for possible variations or reading errors due e.g. to temperature variations etc.

Figure 3 shows the block diagram of the above method.

It is clear from the above that by means of the method and apparatus of the invention it is possible to measure the thickness of a film with high accuracy, since the machine can perform, at preset intervals, self-calibration cycles in order to correct the sensor response errors due to variations of the physical conditions and moreover, by performing a mapping of the cylinder through the storage of the values measured at every passage, the machine can further improve every time the accuracy of the measurements performed. It will be apparent to the skilled person that various modifications and changes are possible without departing from the scope of this invention as defined in the appended claims.

**Claims**

1. An apparatus for measuring the thickness of a moving film comprising:

    a metal cylinder over which the film (3) is moved in sliding contact, and
    a scanning head (8) adapted to move parallel to said metal cylinder axis and including a laser sensor (13) and a magnetic sensor (11, 12j,

    characterized in that

    said scanning head (8) is equipped with a further separate magnetic sensor (12, 11), the laser sensor (13) being arranged in an intermediate position between the two magnetic sensors (11,12), said two magnetic sensors (11,12) and said laser sensor (13) being aligned in the direction of movement of the scanning head (8), and in that
    means are provided for obtaining from the magnetic sensors (11,12) an interpolated value corresponding to the distance to the metal surface underlying the target area of the laser sensor (13) on the film (3).

2. An apparatus according to claim 1 characterised in that said metal cylinder is idle and dragged into rotation by the film (3).

3. An apparatus according to claim 1 and 2 characterised in that it comprises at one end of the cylinder a calibration zone in which the surface of said cylinder has a profile known a priori, suitable means being provided to move the scanning head (8) to said zone to perform a series of measurements while holding the head (8) in position by means of the two magnetic sensors (11,12) and the laser optical sensor (13) respectively, and means for adjusting the response curves of the magnetic sensors as a function of the measurements from said optical sensor.

4. An apparatus according to claim 3 characterised in that the surface of said calibration zone of said cylinder consists of a series of circle arcs of different diameter.

5. A method for measuring the thickness of a film (3) moving in sliding contact over a metal reference surface, by means of an apparatus as defined in any of the claims 1-4, comprising the steps of:

    measuring a distance to the film surface by means of a laser sensor (13);
    measuring a distance of the metal surface by means of the magnetic sensors (11,12);
    estimating by interpolation the distance of the metal surface underlying the target area of the laser sensor; and
    calculating the difference between said two measurements.

6. A method according to claim 5 wherein at every reading the distances detected by the magnetic sensors (11,12) are stored, each of such measurements being associated to a pair of coordinates that are suited to localize a well defined zone of the metal surface; a map / of said metal surface is built up and such map is utilized to correct, during the subsequent passages, the distances which have been obtained by interpolation from the measurements performed by the magnetic sensors (11,12).

7. A method according to claim 6 where at every scanning by the magnetic readers (11,12) the values relative to the distance of the metal surface in correspondence with the intermediate points are read from said map and the distance of said metal surface in correspondence with the laser reading zone is obtained by means of a polynomial interpolation between said intermediate value read from the map and the values detected by the magnetic sensors (11,12).

8. A method according to any one of claim 5-7, comprising a self-calibration step in which measurements by means of the magnetic sensors (11,12) and the laser sensor (13), while holding the head (8) standstill, are sequentially performed in correspondence with a same surface zone the profile of which is known a priori and the response curves of the magnetic sensors (11,12) are corrected according to a function of a curve supplied by the laser reader (13).

**Patentansprüche**

1. Vorrichtung zum Messen der Dicke eines sich bewegenden Films, welcher aufweist:

   einen Metallzylinder, über den der Film (3) in gleitendem Kontakt bewegt wird, und
   einen Abtastkopf (8), der ausgelegt ist, um sich parallel zu der Metallzylinderachse zu bewegen und einen Lasersensor (13) sowie einen magnetischen Sensor (11, 12) enthält,

   dadurch gekennzeichnet, daß

   der Abtastkopf (8) mit einem weiteren gesonderten magnetischen Sensor (12, 11) ausgestattet ist, wobei der Lasersensor (13) in einer Zwischenstellung zwischen den beiden magnetischen Sensoren (11, 12) angeordnet ist, und die beiden magnetischen Sensoren (11, 12) sowie der Lasersensor (13) in der Bewegungsrichtung des Abtastkopfes (8) ausgerichtet sind, und daß
   Mittel bereitgestellt sind, um von den magnetischen Sensoren (11, 12) einen interpolierten Wert zu erhalten, welcher der Entfernung zu der Metalloberfläche entspricht, die sich unterhalb des Zielbereichs auf dem Lasersensor (13) auf dem Film (3) befindet.

2. Vorrichtung nach Anspruch 1, dadurch gekennzeichnet, daß der Metallzylinder im Leerlauf ist und mittels des Films (3) durch Zug gedreht wird.

3. Vorrichtung nach Anspruch 1 und 2, dadurch gekennzeichnet, daß sie an einem Ende des Zylinders einen Kalibrierungsbereich aufweist, in welchem die Oberfläche des Zylinders ein a priori bekanntes Profil hat, wobei geeignete Mittel vorgesehen sind, um den Abtastkopt (8) zu dem Bereich zu bewegen, um eine Reihe von Messungen durchzuführen, während der Kopf (8) mittels der beiden magnetischen Sensoren (11, 12) bzw. dem optischen Lasersensor (13) in seiner Stellung gehalten wird, sowie Mittel zum Einstellen der Reaktionskurven der magnetischen sensoren in Abhängigkeit von den Messungen von dem optischen Sensor vorgesehen sind.

4. Vorrichtung nach Anspruch 3, dadurch gekennzeichnet, daß die Oberfläche des Kalibrierungsbereichs des Zylinders aus einer Reihe von Kreisbögen mit unterschiedlichem Durchmesser besteht.

5. Verfahren zum Messen der Dicke eines Films (3), der sich in gleitendem Kontakt über eine metallische Referenzoberfläche bewegt, mittels einer Vorrichtung nach einem der Ansprüche 1 bis 4, wobei das Verfahren die folgenden Schritte aufweist:

   Messen einer.Entfernung zu der Filmoberfläche mittels eines Lasersensors (13) ;
   Messen einer Entfernung zu der Metalloberfläche mittels magnetischer Sensoren (11; 12);
   Abschätzen der Entfernung der Metalloberfläche, die sich unterhalb des Zielbereiches des Lasersensors befindet, durch Interpolation; und
   Berechnen der Differenz zwischen den beiden Messungen.

6. Verfahren nach Anspruch 5, bei welchem bei jedem abgelesenen Meßwert die durch die magnetischen Sensoren (11, 12) erfaßten Entfernungen gespeichert werden, wobei jede solcher Messungen einem Koordinatenpaar zugeordnet wird, das geeignet ist, einen wohldefinierten Bereich der Metalloberfläche zu lokalisieren; eine Karte der Metalloberfläche aufgebaut wird und eine solche Karte verwendet wird, um während den darauffolgenden Durchläufen die Entfernungen zu korrigieren, die man durch Interpolation von den Messungen erhalten hat, die durch magnetischen Sensoren (11, 12) durchgeführt wurden.

7. Verfahren nach Anspruch 6, bei welchem bei jedem Abtasten durch die magnetischen Ablesevorrichtungen (11, 12) die Werte bezüglich der Entfernung der Metalloberflache in Übereinstimmung mit den Zwischenpunkten von der Karte abgelesen werden und die Entfernung der Metalloberfläche in Übereinstimmung mit dem Laserablesebereich mittels einer Polynom-Interpolation zwischen dem von der Karte abgelesenen Zwischenwert und den durch die magnetischen Sensoren (11, 12) erfaßten Werten gewonnen wird.

8. Verfahren nach einem der Ansprüche 5 bis 7, welches einen Selbstkalibrierungsschritt aufweist, bei welchem man, während man den Kopf (8) im Stillstand hält, Messungen mittels der magnetischen Sensoren (11, 12) und dem Lasersensor (13) der Reihe nach in Übereinstimmung mit ein und demselben Oberlächenbereich durchführt, dessen Profil a priori bekannt ist, und wobei die Reaktionskurven der magnetischen Sensoren (11, 12) gemäß einer Funktion einer durch die Laserablesevorrichtung (13) bereitgestellten Kurve korrigiert werden.

**Revendications**

1. Un appareil de mesure de l'épaisseur d'un film qui se déplace, comprenant:

   un cylindre métallique au dessus duquel le film (3) est déplacé en contact coulissement, et une tête d'exploration (8) apte à se déplacer parallèlement à l'axe dudit cylindre métallique et incluant un détecteur laser (13) et un détecteur magnétique (11, 12),

caractérisé en ce que

ladite tête d'exploration (8) est équipée d'un détecteur magnétique additionnel séparé (12, 11), ledit détecteur laser (13) étant agencé dans une position intermédiaire entre les deux détecteurs magnétiques (11, 12), lesdits deux détecteurs magnétiques (11, 12) et ledit détecteur laser (13) étant allignés dans la direction de déplacement de la tête d'exploration (8), et en ce que un moyen est agencé pour obtenir des détecteurs magnétiques (11, 12) une valeur interpolée correspondant à la distance à la surface métallique qui est sous-jacente à la zone cible du détecteur laser (13) sur le film (3).

2. Un appareil selon la revendication 1 caractérisé en ce que ledit cylindre métallique est fou et entraîné à rotation par ledit film (3).

3. Un appareil selon les revendications 1 et 2 caractérisé en ce qu'il comprend à l'une des extrémités du cylindre une zone de calibrage dans laquelle le profil de la surface dudit cylindre est connu a priori, un moyen approprié étant agencé pour déplacer la tête d'exploration (8) vers ladite zone pour effectuer une série de mesures au moyen des deux détecteurs magnétiques (11, 12) et du détecteur optique laser (13) respectivement tout en maintenant en position ladite tête (8), et un moyen d'ajustement des courbes de réponse des détecteurs magnétiques en fonction des mesures provenant dudit détecteur optique.

4. Un appareil selon la revendication 3 caractérisé en ce que la surface de ladite zone de calibrage dudit cylindre consiste en une série d'arcs de cercles de différents diamètres.

5. Un procédé de mesure de l'épaisseur d'un film (3) qui se déplace en contact à coulissement au dessus d'une surface de référence métallique, au moyen d'un appareil défini dans l'une quelconque des revendications 1 à 4, comprenant les étapes consistent à:

mesurer au moyen d'un détecteur laser (13) une distance à la surface du film;
mesurer au moyen des détecteurs magnétiques (11, 12) une distance de la surface métallique;

estimer par interpolation la distance de la surface métallique sous-jacente à la zone cible du détecteur laser;
et
calculer la différence entre lesdites deux mesures.

6. Un procédé selon la revendication 5 dans lequel les distances détectées par les deux détecteurs magnétiques (11, 12) sont mémorisées à chaque lecture, chacune de ces mesures étant associée à une paire de coordonnées qui sont aptes à localiser une zone bien définie de la-surface métallique; une carte de ladite surface métallique est établie et cette carte est utilisée pour corriger, au cours des passages ultérieurs, les distances qui ont été obtenues par interpolation à partir des mesures effectuées par lesdits détecteurs magnétiques (11, 12).

7. Un procédé selon la revendication 6 dans lequel les valeurs concernant la distance de la surface métallique en correspondance avec les points intermédiaires sont lues à partir de ladite carte à chaque exploration par les lecteurs magnétiques (11, 12), et la distance de ladite surface métallique en correspondance avec la zone de lecture laser est obtenue au moyen d'une interpolation polynomiale entre ladite valeur intermédiaire lue à partir de la carte et les valeurs détectées par les détecteurs magnétiques (11, 12).

8. Un procédé selon l'une quelconque des revendications 5 à 7, comprenant une étape de calibrage autonome dans laquelle des mesures sont effectuées en séquence au moyen des détecteurs magnétiques (11, 12) et du détecteur laser (13), tout en maintenant immobile la tête (8), en correspondance avec une même zone de surface dont le profil est connu a priori et les courbes de réponse des détecteurs magnétiques (11, 12) sont corrigées selon une fonction d'une courbe fournie par le détecteur laser (13).

FIG.1

FIG.2

Head
Position

Δ∝

yes

no

Calculate S1, S2, L1
average values

Calculate
th

Δ X

yes

no

Store
S1, S2, L1

Read non-zero values
on matrix MS1

Calculate error values by means
of functions F1 and F2

Interpolate for global error
calculation on laser (M)

Record on MS1 the acquired
S1 value

FIG. 3

Store thickness
value

Reset screen S1, S2, L1

Calculate th

Average with previous th calculated
for variations of ∝

```
┌─────────────────────────────────┐
│          Request                │
│        calibration              │
└─────────────────────────────────┘
                │
                ▼
┌─────────────────────────────────┐
│  Move measuring head towards    │
│  calibration station            │
└─────────────────────────────────┘
         Start │ rotation
                ▼
┌─────────────────────────────────┐
│  Position station               │
│  S1 on  X Ø                     │
└─────────────────────────────────┘
                │
                ▼
┌─────────────────────────────────────────────┐
│  Synchronized acquisition of the sensor on the│
│  prefixed angular position                   │
└─────────────────────────────────────────────┘
                │
                ▼
┌─────────────────────────────────┐
│  Move sensor S2 to X Ø          │
└─────────────────────────────────┘
                │
                ▼
┌─────────────────────────────────────────────┐
│  Synchronizd acquisition of the sensor on the │
│  prefixed angular position                   │
└─────────────────────────────────────────────┘
                │
                ▼
┌─────────────────────────────────┐
│  Position laser L1 on X Ø       │
└─────────────────────────────────┘
                │
                ▼
┌─────────────────────────────────────────────┐
│  Synchronized acquisition of the sensor on the│
│  prefixed angular position                   │
└─────────────────────────────────────────────┘
                │
                ▼
┌─────────────────────────────────┐
│  Standardizing magnetic sensors │
└─────────────────────────────────┘
```

Fig. 4